# FASCICULE DE BREVET EUROPEEN

(11) **EP 2 009 237 B1**
(45) Date de publication et mention de la délivrance du brevet: **28.11.2012**
(21) Numéro de dépôt: 08159039.0
(22) Date de dépôt: 25.06.2008
(51) Int. Cl.: F01D 5/10, F01D 25/04, F16F 15/12

(54) **Dispositif amortisseur pour arbre de turbomachine**
Stoßdämpfer für Wellen eines Turbotriebwerks
Turbomachine shaft damper device

(30) Priorité: 26.06.2007 FR 0704579
(43) Date de publication de la demande: 31.12.2008
(73) Titulaire: SNECMA, 75015 Paris (FR)
(72) Inventeur: Baumhauer, Stéphane Jean Joseph, 91300 Massy (FR); Dupeux, Jérôme, Alain, 77000 Vaux Le Penil (FR); Garcin, François Maurice, 75019 Paris (FR); Lombard, Jean-Pierre François, 77830 Pamfou (FR)
(74) Mandataire: David, Daniel

(56) Documents cités:
- EP-A- 1 074 762
- DE-A1- 10 239 941
- FR-A- 943 193
- US-A- 4 177 692
- US-A- 4 392 681

## Description

La présente invention concerne le domaine des turbomachines, plus particulièrement des moteurs à turbine à gaz tels que les turboréacteurs ou turbopropulseurs et vise un dispositif amortisseur de vibrations.

Les turbomachines aéronautiques sont composées d'une pluralité de roues aubagées, c'est-à-dire de disques rotatifs à la périphérie desquels sont fixées des aubes mobiles. Ces roues aubagées sont assemblées à des pièces cylindriques que l'on désigne arbres ou fûts. Ces composants sont des pièces particulièrement sensibles car elles doivent répondre en termes de dimensionnement à des impératifs de tenue mécanique à la rotation, à la température et au chargement aérodynamique. L'ensemble de ces aspects fait que ces structures sont chargées statiquement et que, compte tenu des impératifs de durée de vie ; les amplitudes de vibrations qu'elles subissent doivent rester faibles.

La conception et la mise au point d'une turbomachine impliquant la coordination de plusieurs disciplines, le processus de dimensionnement est itératif. Le dimensionnement vibratoire est effectué afin d'éviter la présence de modes critiques dans la plage de fonctionnement. L'ensemble est validé à la fin du cycle de conception par un essai moteur sur lequel les amplitudes vibratoires sont mesurées. Il apparaît parfois de forts niveaux induits soit par des réponses forcées synchrones ou asynchrones, soit par des instabilités. La conception des arbres ou des fûts doit alors être refaite ce qui est particulièrement long et coûteux.

L'objectif sur le plan industriel est donc de prédire au plus tôt, dans le cycle de dimensionnement, les niveaux de réponse vibratoire des structures afin de pouvoir prendre les mesures correctives qui s'imposent le plus en amont dans la conception. Parmi ces axes, l'amortissement mécanique est un enjeu important pour les concepteurs.

Pour garantir la robustesse de ces pièces vis-à-vis de la fatigue vibratoire, une solution consiste à ajouter sur la structure des dispositifs spécifiques faisant office de sources de dissipation d'énergie. On connaît par exemple par le document EP 1253290 un moyen d'amortissement sur des aubes de roue mobile de compresseur. Il comporte une couche de matériau viscoélastique et une couche de contrainte. Le profil des aubes se trouvant dans la veine d'écoulement des gaz, la solution proposée dans ce document prévoit de creuser une encoche dans le profil des aubes et d'y loger les moyens amortisseurs. La surface des profils d'aubes en contact avec l'écoulement ne présente ainsi pas d'irrégularité et l'écoulement du gaz n'est pas perturbé. Un tel agencement nécessite un usinage délicat en raison de la faible épaisseur de l'aube. De plus, il existe un risque d'introduire un déséquilibre entre les différentes aubes d'une même roue conduisant à un balourd.

L'art antérieur comprend l'enseignement des brevets EP 1074762 qui décrit un moyen d'amortissement de rotor de turbomachine comprenant deux bagues fendues, logées dans une gorge annulaire du rotor entre lesquelles une couche viscoélastique est rapportée et US 4392681 qui décrit des moyens d'amortissement des vibrations dans un arbre creux tournant constitués d'une pluralité de plaques rigides séparées par des couches viscoélastiques.

La présente invention a pour objectif d'atténuer les réponses dynamiques d'une structure sous sollicitation synchrone ou asynchrone, d'origine aérodynamique ou non par un apport d'amortissement dynamique.

L'arbre creux de turbomachine, conforme à l'invention, comprenant une paroi cylindrique avec une portion de surface interne et à une extrémité un organe de fixation à un disque de rotor de la turbomachine, est caractérisé par le fait que sur la dite portion de surface intérieure est fixé au moins un moyen d'amortissement de vibrations stratifié, le moyen d'amortissement comprenant au moins une couche de matériau viscoélastique en contact avec ladite portion de surface et une contre couche de matériau rigide, ladite contre couche comprenant un prolongement latéral formant un organe de fixation mécanique à l'arbre et maintenant la couche viscoélastique en appui contre ladite portion de surface intérieure.

L'originalité de la présente invention repose sur l'emploi d'un stratifié de matière viscoélastique avec une couche de contrainte, ledit stratifié étant en appui sur la structure de manière à dissiper l'énergie vibratoire de la pièce.

La dissipation de l'énergie vibratoire est obtenue par déformation en cisaillement du matériau viscoélastique, entre la structure qui se déforme sous sollicitation dynamique et la couche de contrainte entraînée par inertie. Ce stratifié est fixé à l'intérieur des arbres ou fûts et amortissent directement les modes de vibrations des pièces considérées.

L'invention permet d'accroître l'amortissement structural d'une pièce métallique et de résoudre un problème vibratoire rencontré en conception : ceci a pour conséquence en final de réduire les temps de développement et des mises au point associées et donc de réduire les coûts.

Elle autorise également l'élargissement des domaines de conception classiques bornés par la satisfaction des prestations de tenu aux charges alternées et indirectement des gains de masse.

L'invention est applicable quel que soit le type de chargement dynamique : croisement avec des harmoniques moteurs, excitation asynchrone ou acoustique, instabilité aéroélastique ou excitation par contact rotor-stator.

Selon les différents modes de réalisation,
- Le moyen d'amortissement recouvre partiellement, axialement ou circonférentiellement ladite portion de surface interne - L'arbre comprend une pluralité de moyens d'amortissement répartis circonférentiellement sur la portion de surface interne.
- Les couches sont liées entre elles.
- Le stratifié est constitué d'un empilement de couches viscoélastiques et de couches rigides alternées.
- Les caractéristiques du matériau viscoélastique varient d'une couche à l'autre.
- Les caractéristiques du matériau viscoélastique sont les mêmes d'une couche à l'autre.
- Les caractéristiques du matériau rigide varient d'une couche rigide à l'autre.
- Les caractéristiques du matériau rigide sont les mêmes d'une couche rigide à l'autre.

L'invention porte aussi sur une turbomachine comprenant au moins un tel arbre.

D'autres caractéristiques et avantages ressortiront de la description qui suit de divers modes de réalisation de l'invention en référence aux dessins annexés sur lesquels :
La figure 1 représente schématiquement un turboréacteur en coupe axiale susceptible d'incorporer un arbre de l'invention ;
La figure 2 représente en coupe un stratifié d'amortissement ;
La figure 3 représente un arbre vu en perspective équipé d'un stratifié d'amortissement ;
La figure 4 montre l'arbre de la figure 3 en coupe axiale avec un mode de réalisation de l'invention.

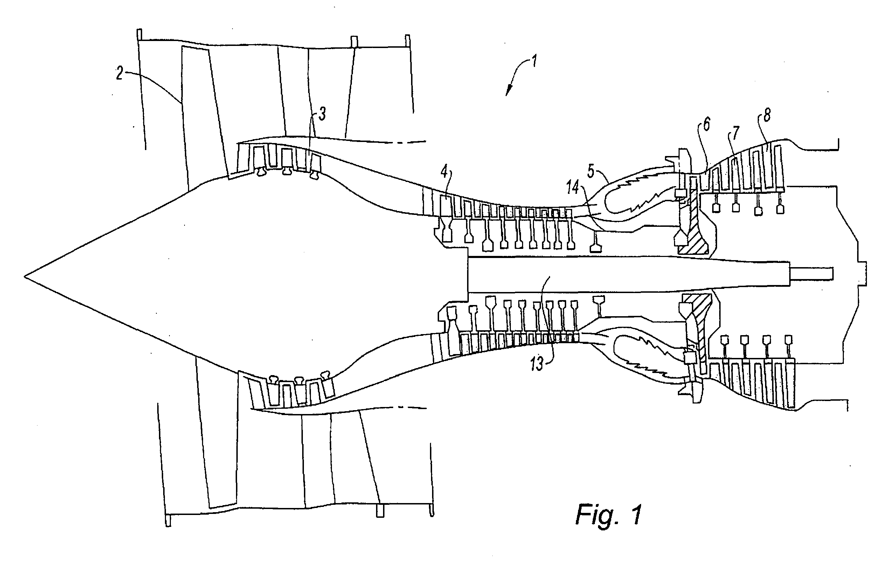

En se référant à la figure 1, on a représenté de manière schématique un exemple de turbomachine sous la forme d'un turboréacteur 1 double flux et à double corps. Une soufflante 2 à l'avant alimente le moteur en air. L'air comprimé par la soufflante est partagé en deux flux concentriques. Le flux secondaire est évacué directement dans l'atmosphère et fournit une part essentielle de la poussée motrice. Le flux primaire est guidé à travers plusieurs étages 3 et 4 de compression vers la chambre de combustion 5 où il est mélangé au carburant et brûlé. Les gaz chauds alimentent les différents étages 6 et 7 de turbine qui entraînent la soufflante et les étages de compression. Les gaz sont ensuite évacués dans l'atmosphère.

Structurellement un tel moteur comprend deux rotors tournant à des vitesses différentes : un rotor HP 4-6 traversé par des gaz dits à haute pression et un rotor BP 2-3-7 traversé par des gaz dits à basse pression. Le rotor HP comprenant un rotor de compresseur HP 4 à tambour et le disque de turbine HP 6 de part et d'autre de la chambre de combustion 5 et reliés par un arbre ou un fût cylindrique 14. Le rotor BP comprend le rotor de soufflante 2 et le rotor du compresseur 3 de gavage reliés par un arbre 13 à un rotor de turbine BP.

On dispose des moyens d'amortissement dynamiques de vibrations sur des portions de surface internes des arbres ou fûts cylindriques reliant les rotors entre eux.

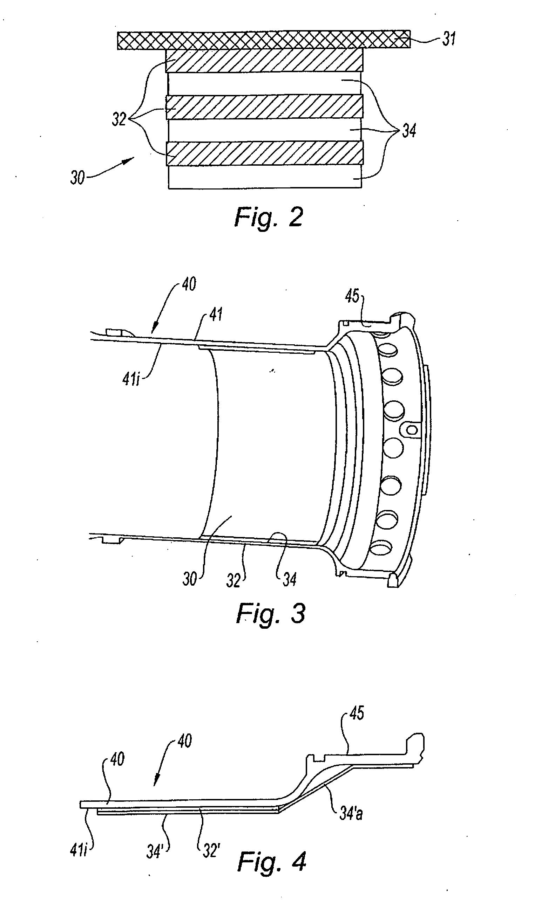

Comme on le voit sur la figure 2, un moyen amortisseur 30 se présente sous la forme d'un stratifié avec une pluralité de couches empilées les unes sur les autres. Le stratifié comporte une couche 32 d'un matériau viscoélastique et une contre couche 34 d'un matériau rigide. Le stratifié 30 est appliqué par la couche 32 contre la surface de la structure à amortir.

La viscoélasticité est une propriété d'un solide ou d'un liquide qui lorsqu'il est déformé montre un comportement à la fois visqueux et élastique par une dissipation et un stockage simultanés d'énergie mécanique

Les caractéristiques, isotropes ou anisotropes, d'élasticité du matériau rigide de la contre couche 34 sont supérieures à celles, isotropes ou anisotropes du matériau viscoélastique dans la plage de fonctionnement thermique et fréquentielle souhaitée. A titre d'exemple non limitatif, le matériau de la couche 34 peut être de type métallique ou composite, et le matériau de la couche 32 de type caoutchouc, silicone, polymère, verre ou résine époxy. Le matériau doit être efficace en terme de dissipation d'énergie dans la configuration attendue correspondant à des plages de températures et de fréquences déterminées. Il est choisi à partir de ses modules caractéristiques de cisaillement, exprimés en déformation et vitesse.

Le stratifié peut comporter plusieurs couches 32 de matériau viscoélastique et plusieurs contre couches de matériau rigide 34, qui sont disposées de façon alternée. L'exemple de la figure 2 montre de façon non limitative un stratifié d'amortissement ayant trois couches 32 de matériau viscoélastique et trois contre couches 34 de matériau rigide. Selon les applications, les couches de matériau viscoélastique 32 et les contre couches de matériau rigide 34 sont d'égales dimensions ou de dimensions différentes. Lorsque le stratifié comporte plusieurs couches 32, celles-ci peuvent présenter toutes les mêmes caractéristiques mécaniques ou bien présenter des caractéristiques mécaniques différentes. Lorsque le stratifié comporte plusieurs contre couches 34, celles-ci peuvent présenter toutes les mêmes caractéristiques mécaniques ou bien présenter des caractéristiques mécaniques différentes. Les couches 32 et les contre couches 34 sont fixées les unes aux autres de préférence par adhésion au moyen d'un film de colle ou par polymérisation.

Sur la figure 3, l'arbre 40 dont on ne voit qu'une partie proche d'une extrémité, est creux et comprend une paroi cylindrique 41. Cette extrémité est pourvue d'un organe de fixation 45 à une pièce telle qu'un disque de turbine ou de compresseur par exemple. La liaison est par boulonnage. Cet organe de fixation 45 comprend une portion cylindrique 45b de même axe que l'arbre creux et de diamètre supérieur à celui-ci. Il est relié par une portion sensiblement tronconique 45a à l'arbre 40. La surface interne 41 i de l'arbre comprend au moins une portion de forme sensiblement cylindrique droite, parallèle à l'axe de l'arbre. Le stratifié 30, constitué de deux couches : 32 viscoélastique et 34 contre-couche rigide, est fixé sur cette portion de surface 41 i. Le stratifié 30 est ici fixé par collage ou polymérisation de la couche viscoélastique sur la portion de surface 41 i. Ce stratifié s'étend sur une portion axiale de la portion de surface 41 i cylindrique. De préférence il s'étend circonférentiellement sur toute la surface.

En fonctionnement, les modes de vibrations de l'arbre sont amortis par le stratifié sans perturber le flux aérodynamique dans la veine de gaz.

Sur la figure 4, on a représenté un mode de réalisation de l'invention. L'arbre est le même que précédemment. L'extrémité de l'arbre est pourvue d'un organe de fixation 45 à un disque de turbine ou de compresseur par exemple. La liaison est par boulonnage. Cet organe de fixation 45 comprend une portion cylindrique de même axe que l'arbre creux et de diamètre supérieur à l'extrémité de celui-ci. Il est relié par une portion sensiblement tronconique à l'arbre 40. Le stratifié d'amortissement 30' comprend ici aussi une couche viscoélastique 32' et une contre couche 34' rigide. La contre-couche rigide 34' comprend un prolongement latéral 34a', c'est-à-dire un prolongement dans l'axe de l'arbre, qui prend appui sur une partie de ce dernier. Il s'agit selon cet exemple de l'organe de fixation 45. Le prolongement latéral 34a' comprend une partie tronconique et une partie cylindrique. La partie cylindrique s'appuie sur la face intérieure de la partie cylindrique 45b de l'organe de fixation 45. Elle est boulonnée ou solidarisée par tout autre moyen sur l'organe de fixation 45. De préférence la fixation comprend le boulonnage de l'organe de fixation 45 au disque auquel l'arbre est associé. Par ce moyen on garantit une meilleure tenue du stratifié d'amortissement pendant les différents événements auquel l'arbre est amené à résister. Dans ce cas, le stratifié n'est pas nécessairement collé sur la face interne de l'arbre. La fixation mécanique est agencée de préférence de façon à assurer une pression du stratifié contre cette surface de telle manière que lorsque des vibrations surviennent celles-ci soient transmises à la couche viscoélastique.

## Revendications

1. Arbre (40) creux de turbomachine comprenant une paroi cylindrique (41) avec une portion de surface interne (41i) et à une extrémité un organe de fixation (45) à un disque de rotor de la turbomachine étant sur la dite portion de surface interne (41) étant fixé au moins un stratifié (30') d'amortissement de vibrations, le stratifié comprenant au moins une couche de matériau viscoélastique (32') en contact avec ladite portion de surface et une contre couche de matériau rigide (34'), **caracterisé par le fait que** la conte couche (34') comprend un prolongement latéral (34'a) formant un organe de fixation mécanique à l'arbre et maintenant la couche viscoélastique en appui contre ladite portion de surface interne.

2. Arbre creux selon la revendication précédente dont ledit prolongement latéral (34'a) est fixé audit organe de fixation de l'arbre à un disque de rotor de la turbomachine.

3. Arbre creux selon la revendication 1 ou 2 comprenant une pluralité de stratifiés répartis circonférentiellement sur la portion de surface intérieure.

4. Arbre creux selon l'une des revendications précédentes dont les couches sont liées entre elles, notamment par collage.

5. Arbre creux selon l'une des revendications précédentes dont le stratifié est constitué d'un empilement de couches viscoélastiques et de couches rigides alternées.

6. Arbre creux selon la revendication précédente dont les caractéristiques du matériau viscoélastique varient d'une couche à l'autre.

7. Arbre creux selon la revendication 5 dont les caractéristiques du matériau viscoélastique sont les mêmes d'une couche à l'autre.

8. Arbre creux selon l'une des revendications 5 à 7 dont les caractéristiques du matériau rigide varient d'une couche rigide à l'autre.

9. Arbre creux selon la revendication 8 dont les caractéristiques du matériau rigide sont les mêmes d'une couche rigide à l'autre.

10. Turbomachine comprenant au moins un arbre creux selon l'une des revendications précédentes.

11. Turbomachine selon la revendication précédente comprenant un compresseur et dont ledit arbre est relié à un disque du compresseur.

## Claims

1. A hollow shaft (40) of a turbine engine comprising a cylindrical wall (41) with an internal surface portion (41 i) and at one end a member for attachment (45) to a rotor disk of the turbine engine, at least one vibration-damping laminate (30') being attached to said internal surface portion (41), the laminate comprising at least one layer of viscoelastic material (32') in contact with said surface portion and a counterlayer of rigid material (34'), **characterised in that** the counterlayer (34') comprises a lateral extension (34'a) forming a member for mechanical attachment to the shaft and keeping the viscoelastic layer resting against said internal surface portion.

2. The hollow shaft as claimed in the preceding claim, wherein said lateral extension (34'a) is attached to said member for attaching the shaft to a rotor disk of the turbine engine.

3. The hollow shaft as claimed in claim 1 or 2, comprising a plurality of laminates distributed circumferentially over the internal surface portion.

4. The hollow shaft as claimed in one of the preceding claims, wherein the layers are connected together, particularly by bonding.

5. The hollow shaft as claimed in one of the preceding claims, wherein the laminate consists of a stack of alternating viscoelastic layers and rigid layers.

6. The hollow shaft as claimed in the preceding claim, wherein the characteristics of the viscoelastic material vary from one layer to another.

7. The hollow shaft as claimed in claim 5, wherein the characteristics of the viscoelastic material are the same from one layer to another.

8. The hollow shaft as claimed in one of claims 5 to 7, wherein the characteristics of the rigid material vary from one rigid layer to another.

9. The hollow shaft as claimed in claim 8, wherein the characteristics of the rigid material are the same from one rigid layer to another.

10. A turbine engine comprising at least one hollow shaft as claimed in one of the preceding claims.

11. The turbine engine as claimed in the preceding claim, comprising a compressor and wherein said shaft is connected to a disk of the compressor.

## Patentansprüche

1. Hohlwelle (40) einer Turbomaschine, umfassend eine zylindrische Wand (41) mit einem Innenflächenabschnitt (41i) und an einem Ende einen Körper (45) zum Befestigen einer Rotorscheibe der Turbomaschine, wobei auf dem Innenflächenabschnitt (41) mindestens ein Schichtpressstoff (30') zur Dämpfung von Schwingungen befestigt ist, wobei der Schichtpressstoff mindestens eine Schicht aus viskoelastischem Material (32'), die mit dem Flächenabschnitt in Kontakt ist, und eine Gegenschicht aus steifem Material (34') umfasst, **dadurch gekennzeichnet, dass** die Gegenschicht (34') einen seitlichen Fortsatz (34'a) umfasst, der einen Körper für die mechanische Befestigung an der Welle bildet und die viskoelastische Schicht in Auflage gegen den Innenflächenabschnitt hält.

2. Hohlwelle nach dem vorhergehenden Anspruch, wobei der seitliche Fortsatz (34'a) an dem Körper zur Befestigung der Welle an einer Rotorscheibe der Turbomaschine befestigt ist.

3. Hohlwelle nach Anspruch 1 oder 2, umfassend eine Vielzahl von Schichtpressstoffen, die über den Umfang des Innenflächenabschnitts verteilt sind.

4. Hohlwelle nach einem der vorhergehenden Ansprüche, wobei die Schichten miteinander verbunden sind, insbesondere durch Verkleben.

5. Hohlwelle nach einem der vorhergehenden Ansprüche, wobei sich der Schichtpressstoff abwechselnd aus einem Stapel von viskoelastischen Schichten und von steifen Schichten zusammensetzt.

6. Hohlwelle nach dem vorhergehenden Anspruch, wobei die Merkmale des viskoelastischen Materials von einer Schicht zur anderen variieren.

7. Hohlwelle nach Anspruch 5, wobei die Merkmale des viskoelastischen Materials von einer Schicht zur anderen dieselben sind.

8. Hohlwelle nach einem der Ansprüche 5 bis 7, wobei die Merkmale des steifen Materials von einer steifen Schicht zur anderen variieren.

9. Hohlwelle nach Anspruch 8, wobei die Merkmale des steifen Materials von einer steifen Schicht zur anderen dieselben sind.

10. Turbomaschine, umfassend mindestens eine Hohlwelle nach einem der vorhergehenden Ansprüche.

11. Turbomaschine nach dem vorhergehenden Anspruch, umfassend einen Kompressor und wobei die Welle mit einer Scheibe des Kompressors verbunden ist.
